# EUROPEAN PATENT APPLICATION

(11) **EP 2 272 727 A2**
(43) Date of publication of application: **12.01.2011**
(21) Application number: 10007042.4
(22) Date of filing: 08.07.2010
(51) Int. Cl.: B60S 1/38, B60S 1/52

(54) **Flat wiper blade**

(30) Priority: 08.07.2009 DE 102009032375
(71) Applicant: Valeo Systèmes d'Essuyage, 78321 Le Mesnil Saint Denis (FR)
(72) Inventor: Egner-Walter, Bruno, 74076 Heilbronn (DE); Schäuble, Michael, 71665 Vaihingen/Enz (DE)
(74) Representative: Rosolen-Delarue, Katell

(57) **Abstract**

Flat wiper blade for windscreen wiper modules, having a wiper blade body, which comprises at least one wiping rubber (12) forming at least one wiping lip (12.1), at least one spring rail (11), in addition to at least one heating foil (19) extending at least over a portion of the wiper blade (3) and forming at least one electrical heating conductor or heating circuit and also having a wiper blade adapter (9) between the two ends of the wiper blade and attached to the latter for mechanical detachable connection of the wiper blade to a wiper arm (1), wherein the wiper blade adapter (9) presents at least one electrical connection (24) electrically connected to the heating foil (19) on the wiper blade side for connection to an external electrical supply lead.

## Description

The invention refers to a flat wiper blade and in this case specifically to an electrically heatable flat wiper blade according to the generic term of patent claim 1.

Flat wiper blades, which essentially consist respectively of at least one spring rail, a wiping rubber connected to the at least one spring rail and forming at least one wiping lip and a wiper blade adapter, with which the respective wiper blade can be detachably mounted on a wiper arm and on an adapter on the wiper arm side at this position, are also known in particular in the most diverse embodiments for windscreen wiper modules of road vehicles. Also known are specifically flat wiper blades in the form of wet wiper blades, which present on at least one wiper blade longitudinal side at least one injection duct having a large number of jet openings for application of a washing and cleaning fluid (generally water with cleaning and/or antifreeze additives if required), but also electrically heated flat wiper blades with a heating foil, which present or form at least one heating conductor or heating current circuit through which a heating current can flow.

It is also known in particular in this case (DE 100 39 290 A1) to make provision for the respective heating foil, which consists of an insulating layer and of the heating conductor provided on a surface side of this insulating layer, directly on the spring rails of a flat wiper blade presenting two such spring rails and to be more precise, exposed on the surface areas of these spring rails facing the wiping lip and projecting from the wiping rubber.

Establishment of the electrical connection between the heating foil and an external electrical supply lead for the heating foil and/or of the connection between the heating foil and an electrical connection provided for example on the wiper blade adapter for the external electrical supply lead is labour intensive with known heatable flat wiper blades and requires as a rule in serial production elaborate soldering, which does not fulfil the requirements of rational and economical production.

Also known furthermore is an electrically heatable wiper blade not designed as a flat wiper blade but as a bow wiper blade instead, in which a heating element runs, composed of a heating filament embedded in the wiping rubber or however in a profile, which lies on the upper side of the wiping rubber. The electrical connection of the heating conductor with an external bifilar supply lead is performed via a double plug connector provided on this supply lead, which is connectable to the socket-like plug contacts embedded in the wiping rubber and in the strip. Apart from the fact that this known heated wiper blade does not involve a flat wiper blade, it is also completely unsuitable for practical use.

The purpose of the invention is to demonstrate a wiper blade that fulfils the requirements of rational and economical production. In order to solve this problem, a wiper blade according to patent claim 1 is developed.

By means of the design according to the invention, it is possible to establish the electrical connection between the at least one heating foil and the respective wiper blade adapter in a particularly simple and rational way, simultaneously avoiding soldering processes or other elaborate bonding methods. In so doing, the wiper blade adapter is preferably equipped with an electrical connection, which by means of simple push-fitting, allows the electrical connection between the at least one heating foil and the external electrical connecting or supply lead and with the conductors of this preferably at least bifilar connecting lead.

Further developments, advantages and application possibilities of the invention are also apparent from the following description of examples of embodiment and from the figures. In this case, all the characteristics described and/or illustrated are in themselves or in any desired combination fundamentally a subject of the invention, regardless of their summary in the claims or their backward relation. The contents of the claims are also made an integral part of the description.

The invention is described below in further detail in examples of embodiment based on the figures:
Fig. 1 shows a simplified representation of a wiper arm together with a wiper blade provided on this wiper arm and in contact with a vehicle windscreen;
Fig. 2 shows a section through the wiper blade along the line I - I in Figure 1;
Fig. 3 shows a partial representation and a longitudinal section of the retaining strip of the wiper blade in Figure 1, together with the spring rail, the heating foil and one of the two electrical connections for the heating foil;
Fig. 4 shows a perspective representation of a top view of a retaining strip surrounding the spring rail, together with a wiper blade adapter, before installation of the wiper blade adapter;
Fig. 5 and 6 show a side view and top view of the arrangement in Figure 4 after installation of the wiper blade adapter on the retaining strip;
Fig. 7 shows a section through the retaining strip, the spring rail and the installed wiper blade adapter;
Fig. 8 shows a schematic representation of a top view of the spring rail with the heating foil;
Fig. 9 shows a section along the line II - II in Figure 8;
Fig. 10 shows a representation as in Figure 3 with a further form of embodiment of the invention.

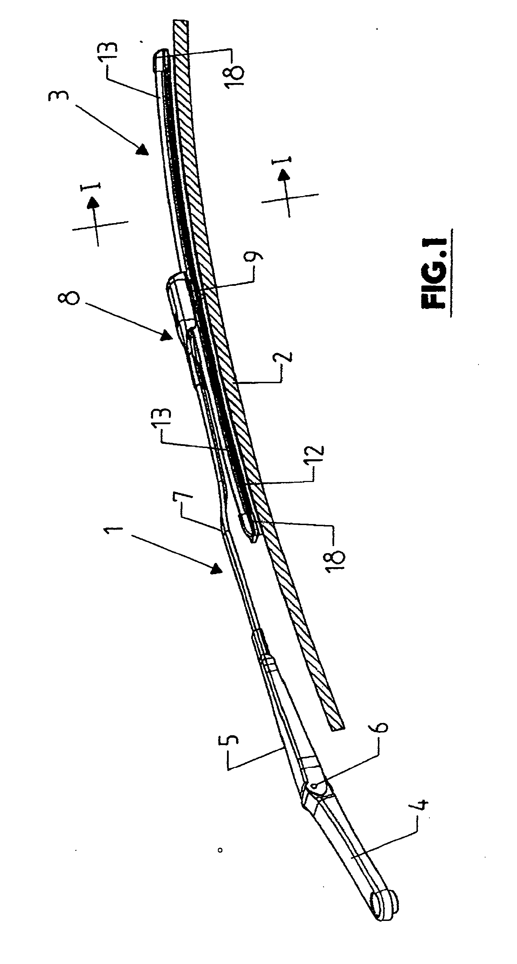

Figure 1 illustrates a wiper arm 1 together with a wiper blade 3 detachably mounted on this wiper arm and in contact with a vehicle windscreen 2 which is executed as a flat wiper blade or a flat wiper blade in the manner described in further detail below.

The wiper arm 1 is designed in the usual manner, i.e. consisting of a bearing section 4 for attachment to a wiper shaft, not illustrated, of the vehicle windscreen wiper module, an articulation piece 5, which is connected to the bearing section 4 by means of a wiper arm articulation 6 and a wiper rod 7, connected to the bearing section 5, presenting on the free end of the wiper arm 1 an adapter 8 on the wiper arm side. By means of this adapter 8, the wiper blade 3 is detachably connected to the wiper arm 1 mechanically, electrically and hydraulically in the manner described below with an adapter or wiper blade adapter 9 on the wiper blade side.

The wiper blade 3 is executed as an electrically heated wiper blade and indeed in the form of embodiment presented also as a wet wiper blade, by means of which controlled application of a washing or cleaning fluid (water with cleaning and/or antifreeze additives if required) to the vehicle screen 2 is also additionally possible.

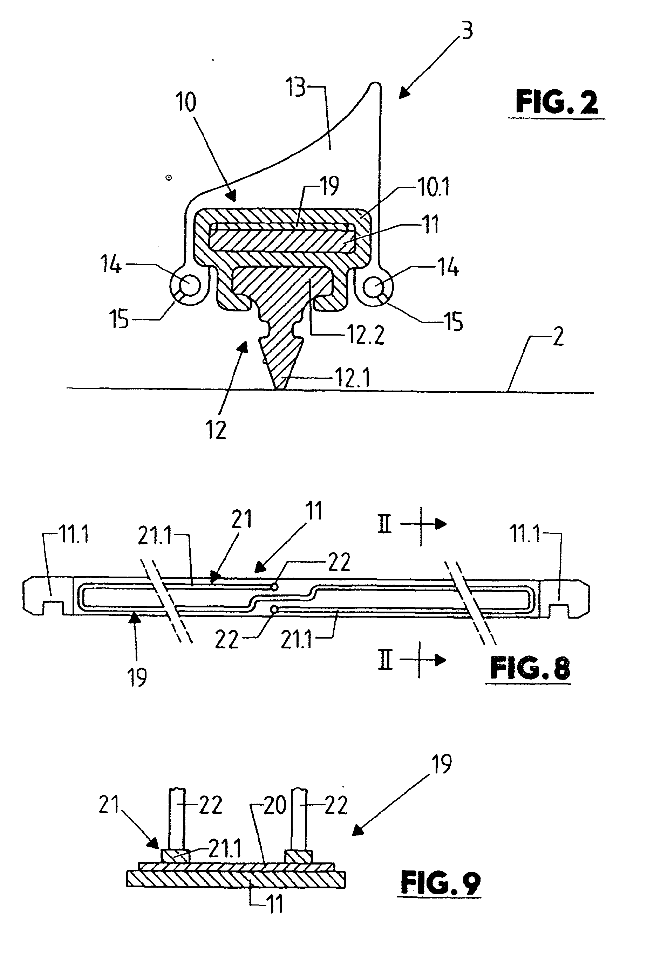

As can be gathered from Figure 2 in particular, the wiper blade 3 comprises among other aspects a profile or retaining strip 10, manufactured from plastic for example, which extends over the entire or almost entire length of the wiper blade 3 and which accommodates in a profile section 10.1 designed as a hollow profile a flat spring rail 11 manufactured from spring steel, which likewise extends over the entire length of the wiper blade 3 and which has sections 11.1 projecting from the retaining strip 10 at both wiper blade ends. In order to avoid impairment of the necessary flexibility of the wiper blade 3 by the retaining strip 10, the latter is provided with a large number of notches 10.2 on its profile section 10.1 executed as a hollow profile receiving the spring rail 11. In order to allow attachment of the wiper blade adapter 9 to the spring rail 11, the retaining strip 10 is also laterally open on its profile section 10.1 receiving the spring rail, so that the spring rail 11 is exposed at this position with peripheries 11.2 for attachment of the wiper blade adapter 9.

The wiper blade 3 furthermore comprises a wiping rubber 12 consisting of rubbery-elastic profile material, which among other aspects forms the wiping lip 12.1 in contact with the vehicle windscreen 2 and which is held with a positive fit in the retaining strip with a profile section 12.2. On both sides of the wiper blade adapter 9 attached to the retaining strip 10 or spring rail 11 in the centre or approximately in the centre of the wiper blade 3 and spanning these on its upper side facing away from the wiping lip 12.1 in the manner of slide, a spoiler profile 13 is fixed to the retaining strip 10. Each spoiler profile 13, which starting from the wiper blade adapter 9 extends almost to one end of the wiper blade 3, is executed with two injection ducts 14, of which one is respectively located on each longitudinal side of a wiper blade and which present a large number of jet openings 15 for application of the washing and cleaning fluid supplied to the respective duct 14 to the vehicle windscreen. The injection ducts 14 are each connected to a connection nozzle 16, which is designed for example in one piece with the wiper blade adapter 9 manufactured as a plastic moulding. Both connection nozzles 16 on each longitudinal side of the wiper blade adapter 9 and the wiper blade 3 form a common connection duct, which is linked to a hydraulic and fluid connection 17 composed of a connection opening 17.1 and to be more precise, for respective connection of a flexible supply line or hose not illustrated running along the wiper arm 1 for delivery of the washing and cleaning fluid to the injection ducts 14.

At both ends, the wiper blade 3 is terminated respectively by an end cap 18 manufactured as a plastic moulding, which is held in place by snapping on the section 11.1 of the spring rail 1.

The wiper blade 3 is not only executed as a wet wiper blade with the injection ducts 14 presenting the jet openings 15, but also as an electrically heated wiper blade. For this purpose, in the form of embodiment presented, an electrical heating foil 19 is applied to a surface side of the spring rail 11 and in this case specifically to the surface side of the spring rail 11 facing away from the upper side of the wiper blade. According to figures 8 and 9, this heating foil 19, which extends over the entire length or substantially over the entire length of the spring rail 11 accommodated in the retaining strip 10, is composed of an insulating layer 20 manufactured for example from a single-layer or multiple-layer foil made of plastic and of a metallisation 21 applied to a surface side of this insulating layer 20, which is at least designed and/or structured such that it forms at least one heating conductor 21.1 extending over the entire length or substantially the entire length of the heating foil 19. With its surface side not presenting the metallisation 21, the heating foil 19 is in contact with the top side, i.e. the upper side of the spring rail 11 facing away from the wiping lip 12.1. The metallisation 21 is fixed in a suitable way to the upper side of the insulating layer 20 facing away from the spring rail, for instance by gluing or in another appropriate manner and consists for example of a correspondingly structured metal foil and/or of an electric heating filament etc. In the form of embodiment presented, the metallisation 21 is structured in such a way as to form a single heating conductor 21.1, which extends starting from a central section of the spring rail 11 and the heating film 19 at the one end, from this point back to the other end of the heating foil 19 and subsequently back to the central area of the heating film 19. At both ends of the heating conductor 21.1, the latter and the metallisation 21 are respectively provided in the form of embodiment presented with a plug contact-like or pin-like connection 22, of which each is oriented with its axis vertically in relation to the plane of the upper side of the spring rail 11 and in the installed state projects over the upper side of the retaining strip 10 facing away from the wiping lip 12.1 and to be more precise in such a way that after fitting and installation of the wiper blade adapter 9, each connection 22 extends into a connector socket 23 provided in the wiper blade adapter 9, which (connector socket) is electrically connected to a plug contact 25 of an electrical connection 24 provided in a connection opening 24.1. The electrical and mechanical connection between each connector pin 22 and the metallisation 21 and the heating conductor 21.1 is established for example by spot welding, soldering or by other suitable means.

The electrical connection 24 is located on the same wiper blade adapter front side on which the two hydraulic connections 17 are also provided and to be more precise on the wiper blade adapter front side 9.1 arranged in one plane vertically to the longitudinal extension of the wiper blade 3 and facing one end of this wiper blade above the two hydraulic connections 17. By means of the plugwasher 26 provided in the area of the opening of each connector socket 23 and tightly surrounding the respective connection 22, the ingress of water and/or moisture into the inside of each connector socket 23 is effectively prevented and consequently a corrosion-free electrical connection between the respective end of the heating conductor 21.1 and the connector socket 23 and the corresponding connector plug 25 is permanently established.

By means of the connector plug 25 and by means of an electrical connecting element on the wiper arm side inserted sealed into the connection opening 24.1 and designed as a double socket, the heating foil 19 and its heating conductor 21.1 are connected to a non-illustrated electrical connecting lead, a partial length of which runs along the wiper blade 1.

In a preferred form of embodiment, the electrical and hydraulic connecting elements on the wiper arm side form an integral part of a common connection fitting and/or an integral part of the adapter 8 on the wiper arm side, so that during mechanical attachment of the respective wiper blade 3 on the wiper arm 1 by connection of the adapters 8 and 9, the hydraulic and electrical connection is also simultaneously established.

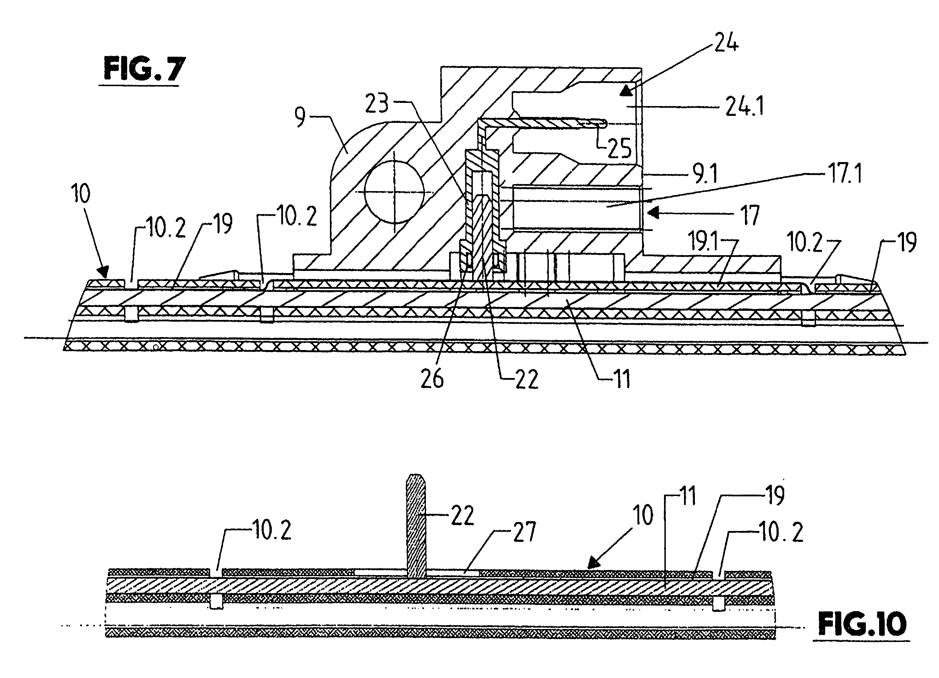

As illustrated in Figure 7, the heating foil 19 in the case of the wiper blade 3 runs in the area of the centre of the wiper blade, i.e. in the position where provision is made for the wiper blade adapter 9, with a partial length 19.1 on the upper side of the retaining strip 10 and is at least covered to the greatest extent by the wiper blade adapter 9 at this position in the installed state of the wiper blade 3, whereas otherwise, the heating foil 19 is in direct contact with the spring rail 11 and is connected to the latter by gluing for example (e.g. with a heat-transfer adhesive). The partial length 19.1 also is fixed for example to the upper side of the retaining strip 10 by gluing (e.g. with a heat-transfer adhesive). The heating foil 19 runs in this case through two notches 10.2.

This embodiment has several advantages:
➢ owing to the arrangement of the heating foil 19 on the spring rail 11 composed of metallic material, a distribution of the electric heating output over the entire wiper blade length that is at least uniform to the greatest possible extent is fundamentally achieved and consequently uniform heating of the wiper blade 3, also at the injection ducts 14.
➢ With a simplified design and production, the heating foil 19 is accommodated under protection.
➢ Even with an extremely thin and therefore optimum execution of the insulating layer 20 for the heating effect, the greater thickness and high strength of the retaining strip 10 ensure that as a result of axial forces inevitably exerted as a result of fitting the wiper blade adapter 9 on to the pin-like connections 22, an undesirable electrical contact between one or however both connections 22 and the spring rail 11 through destruction of the electrical insulation does not occur.
➢ Furthermore, owing to the course of the heating foil 19 over the partial length 19.1 on the upper side of the retaining strip 10, improved heating of the wiper blade adapter 9 and the fluid ducts designed in this adapter is achieved.
➢ As a result of the connections 22 projecting over the upper side of the retaining strip 10, a particularly simple electrical connection between the wiper blade adapter 9 and the heating foil 19 is achieved and to be more precise, with avoidance of elaborate soldering during serial production of the wiper blades 3.

In order to facilitate installation of the spring rail 11 and the heating foil 19, the retaining strip is slotted for example in the area of its profile section 10.1 accommodating the spring rail 11 and the heating foil 19 on a longitudinal side of the retaining strip, so that lateral insertion of the spring rail with the heating foil 19 by snapping into the retaining strip 10 is possible.

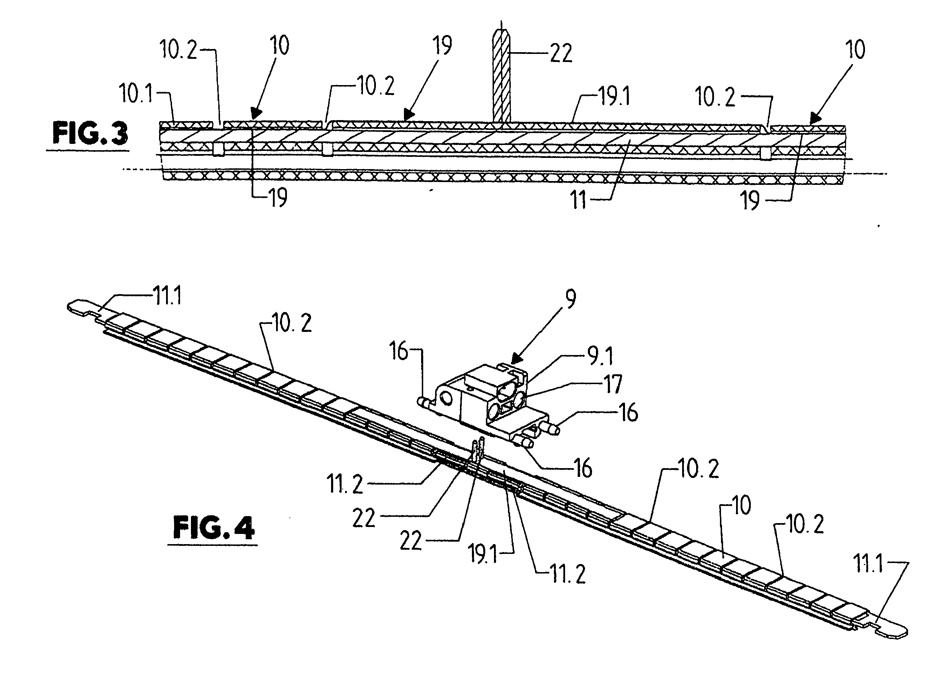

Figure 10 shows in a representation similar to Figure 3 the retaining profile 10 with the spring rail 11 and with the heating foil 19 in a further form of embodiment that solely differs from the form of embodiment previously described in that the heating foil 19 is also in contact with the upper side of the spring rail 11 in the area of the two connections 22, i.e. does not present the partial length 19.1 running on the upper side of the retaining strip 10. In this form of embodiment, the retaining strip 10 is designed with an opening 27 in the area of the centre of the wiper blade, i.e. where the two connections 22 are provided, through which the two connections 22 pass through.

The form of embodiment illustrated in Figure 10 offers the advantage that also when designing the retaining strip 10 with a hollow profile-like section receiving the spring rail 11 in the assembled state, the spring rail 11 with the heating foil 19, although without the connections 22, can be preinstalled and subsequently after this assembly, the connections 22 can be connected in a suitable manner, for example by soldering or spot welding, to the metallisation 21 and to the ends of the at least one heating conductor 21.1.

The invention has been described above based on examples of embodiment. It is understood that numerous modifications and variations are possible without departing as a result from the concept on which the invention is based.

It was therefore assumed above that the electrical connections 22 of the heating foil 19 projecting over the upper side of the wiper blade 3 and the retaining strip 10 are pins. The connections may in principle also be executed differently and to be more precise, with appropriate adaptation of course of the connections or connector sockets 23 in the wiper blade adapter 9. The connections 22 may of course be executed in blade contact fashion.

It was furthermore assumed above that the metallisation 21 forms a single, continuous heating conductor 21.1 or heating circuit. Other designs are of course possible, for example in such a way that the metallisation 21 forms two or however more than two electrically parallel heating conductors 21.1 or heating circuits respectively connected to the connections 22.

It was furthermore assumed above that the metallisation 21 and the at least one heating conductor 21.1 composed of this metallisation is provided by gluing or another means on the electrically insulating layer 20. The metallisation may of course also be created in another way, for example by vapour deposit of an electrically conductive material, for example a metal and/or by electrolytic and/or chemical deposit and/or by spattering etc.

It was furthermore assumed above that the wiper blade 3 only presents a single spring rail 11 and that the heating foil 19 is provided in the area of this single spring rail. Although this represents a preferred embodiment of the invention, other forms of embodiment are also conceivable, for example wiper blades with at least two heating foils and/or spring rails, wherein the respective heating foil is provided inside the wiper blade and in so doing, at least one spring rail for example is again provided in the area. It is common to all embodiments of the invention that the electrical connection of the at least one heating foil is established through the wiper blade adapter and specifically in this case through a plug/socket connection, the plug contact-like connections of which are already provided on the heating foil and indeed in such a way that on mounting the wiper blade adapter on the wiper blade or the wiper blade body, which presents at least the wiper rubber, at least one spring rail and at least one heating foil, the electrical connection between the wiper blade adapter and the at least one heating foil is reliably established.

It was furthermore assumed above that the heating foil 19 for improvement of the heat transfer is glued to the spring rail 11 for example. In principle, the heating foil 19 may also lie in contact with the spring rail 11 without gluing to the latter. In so doing, it is possible in this case that on installation of the wiper blade, the heating foil 19 is inserted into the retaining strip 10 and into the profile section 10.1 of this strip serving to accommodate the spring rail 11 and only then is the spring rail 11 installed and to be more precise, by pushing into the retaining strip 10.

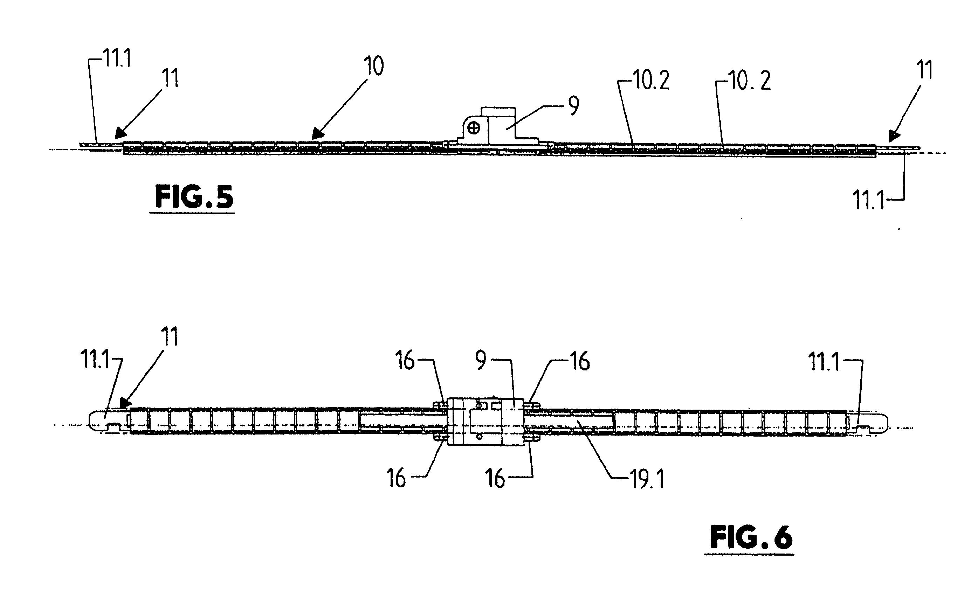

The form of embodiment specifically described in connection with Figures 2 - 7 possesses the advantage that although also after installation of the spring rail 11, alignment of the heating foil 19 is possible by longitudinal displacement, this displacement is rendered more difficult by the course of the heating foil 19 inside and outside the retaining profile 10; as a result however, undesirable displacement of the heating foil 19 is at least avoided to the greatest extent on installation of the spring rail 11.

In the form of embodiment illustrated in Figure 10, the opening 27 in the longitudinal direction of the wiper blade is of a sufficiently large dimension so as to allow in this form of embodiment also alignment of the heating foil 19 by axial displacement.

### List of references

- 1: wiper arm
- 2: vehicle windscreen
- 3: wiper blade
- 4: bearing section
- 5: articulation piece
- 6: wiper arm articulation
- 7: wiper rod
- 8: adapter on wiper arm side
- 9: wiper blade adapter
- 9.1: front side of wiper blade adapter
- 10: retaining strip
- 10.1: profile section
- 10.2: notch
- 11: spring rail
- 11.1: section of spring rail 11
- 11.2: periphery
- 12: wiping rubber
- 12.1: wiping lip
- 12.2: profile section
- 13: spoiler profile
- 14: injection duct
- 15: jet opening
- 16: connection nozzle
- 17: fluid connection
- 17.1: connection opening
- 18: end cap
- 19: heating foil
- 19.1: partial length
- 20: insulating layer
- 21: metallisation
- 21.1: heating conductor
- 22: connector pin
- 23: connector socket
- 24: electrical connection
- 24.1: connection opening
- 25: plug contact
- 26: plugwasher
- 27: opening

## Claims

1. Flat wiper blade for windscreen wiper modules, having a wiper blade body, which comprises at least one wiping rubber (12) forming at least one wiping lip (12.1), at least one spring rail (11) in addition to at least one heating foil (19) extending at least over a portion of the wiper blade (3) and forming at least one electrical conductor (21.1) or heating circuit and also having a wiper blade adapter (9) between the two ends of the wiper blade (3) and attached to the latter for mechanical detachable connection of the wiper blade (3) to a wiper arm (1), wherein the wiper blade adapter (9) presents at least one electrical connection (24) electrically connected to the heating foil (19) on the wiper blade side for connection to an external electrical supply lead, **characterised in that** the electrical connection between the heating foil (19) and the wiper blade adapter (9) is a plug/socket connection and that the heating foil (19) is designed for this purpose with one and preferably two plug contact-like connecting elements (22).

2. Flat wiper blade according to claim 1, **characterised in that** the at least one connecting element (22) projects over one upper side of the wiper blade body in the position at which the wiper blade adapter (9) is mounted on the wiper blade (3) or the wiper blade body.

3. Flat wiper blade according to claim 1 or 2, **characterised in that** a socket-like connecting element (23) is provided in the wiper blade adapter (9) for the at least one electrical connecting element (22) of the heating foil (19), into which the plug contact-like connecting element (22) preferably extends in sealed fashion or sealed by a plugwasher (26).

4. Flat wiper blade according to one of the above claims, **characterised in that** the at least one heating foil (19) is provided on the at least one spring rail (11).

5. Flat wiper blade according to claim 4, **characterised in that** the heating foil (19) consists of at least one insulating layer (20) bearing the at least one heating conductor (20).

6. Flat wiper blade according to claim 5, **characterised in that** the insulating layer (20) is in contact with the at least one spring rail (11) with a surface side facing away from the at least one heating conductor (20.1) and/or is connected to the spring rail at least over a partial length.

7. Flat wiper blade according to any of claims 4 - 6, **characterised in that** the at least one plug contact-like connecting element (22) is oriented with its axis vertically or essentially vertically to the surface sides of the spring rail (11).

8. Flat wiper blade according to any of claims 5 - 7, **characterised in that** the at least one heating conductor (21.1) is formed of at least one metallisation (21) on the insulating layer (20), preferably if a structured metal foil and/or an electrical heating filament.

9. Flat wiper blade according to any of claims 4 - 8, **characterised by** the retaining strip (10) surrounding the at least one spring rail (11) and the at least one heating foil (19) at least over a partial length.

10. Flat wiper blade according to claim 9, **characterised in that** the at least one heating foil (19) is completely surrounded by the retaining strip (10) and that the at least one plug contact-like connecting element (22) projects through the retaining strip (10).

11. Flat wiper blade according to claim 9, **characterised in that** the at least one heating foil (19) runs with a partial length (19.1) in the area of the wiper blade adapter (9) on the outside of the retaining strip (10) and runs at least with a further partial length on the spring rail (11) surrounded by the retaining strip (10).

12. Flat wiper blade according to one of the above claims, **characterised by** a single spring rail (11), on which the at least one heating foil (19) is provided.

13. Flat wiper blade according to one of the above claims, **characterised in that** it is designed as a wet wiper blade and to be more precise with at least one injection duct (14) presenting jet openings (15) for application of a washing and cleaning fluid and that the at least one injection duct (14) is connectable to an external supply line for delivering the washing and cleaning fluid via a hydraulic connection (17) designed on the wiper blade adapter (9), wherein the at least one hydraulic connection (17) and the electrical connection (24) are preferably provided on a common side (9.1) of the wiper blade adapter (9).
